# EUROPEAN PATENT APPLICATION

(11) **EP 3 618 543 A1**
(43) Date of publication of application: **04.03.2020**
(21) Application number: 18917664.7
(22) Date of filing: 10.05.2018
(51) Int. Cl.: H04W 72/04

(54) **METHOD FOR CLEARING HARQ CACHE, DEVICE, AND COMPUTER STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: SHI, Cong, Dongguan, Guangdong 523860 (CN)
(74) Representative: Manitz Finsterwald Patent- und Rechtsanwaltspartnerschaft mbB
(86) International application number: PCT/CN2018/086331
(87) International publication number: WO 2019/213896

(57) **Abstract**

A method for HARQ buffer clearing, a device and a computer storage medium, where the method includes: receiving an uplink grant assigned by a network-side device (S201); performing, based on the uplink grant, detection according to a preset detection policy (S202); and clearing, in response to a set detection result, data buffered in a HARQ process corresponding to the uplink grant (S203).

## Description

### TECHNICAL FIELD

Embodiments of the present invention relate to the field of wireless communications technologies, and in particular, to a method for Hybrid Automatic Repeat reQuest (HARQ) buffer clearing, a device and a computer storage medium.

### BACKGROUND

In the 5th generation (5G) new radio (NR) system, two types of configured grants are introduced, and when a terminal acquires a grant, the terminal may skip that grant. However, according to the current media access control (MAC) protocol, a HARQ buffer will not be cleared when the grant is skipped, thereby an error occurs during data transmission.

### SUMMARY

Embodiments of the present invention are expected to provide a method for HARQ buffer clearing, a device and a computer storage medium, which can avoid the phenomenon of transmitting wrong data in a HARQ process.

The technical solutions of the embodiments of the present invention may be implemented as following:
In a first aspect, an embodiment of the present invention provides a method for HARQ buffer clearing, where the method is applied to a user equipment, and the method includes:
receiving an uplink grant assigned by a network-side device;
performing, based on the uplink grant, detection according to a preset detection policy; and
clearing, in response to a set detection result, data buffered in a HARQ process corresponding to the uplink grant.

In a second aspect, an embodiment of the present invention provides a UE, including: a receiving part, a detecting part and a clearing part; where,
the receiving part is configured to receive an uplink grant assigned by a network-side device;
the detecting part is configure to perform, based on the uplink grant, detection according to a preset detection policy; and
the clearing part is configured to clear, in response to a set detection result, data buffered in a HARQ process corresponding to the uplink grant.

In a third aspect, an embodiment of the present invention provides a UE, including: a network interface, a memory and a processor; where,
the network interface is configured to receive and transmit a signal during a process of transmitting/receiving information to/from other external network element;
the memory is configured to store a computer program that is capable of running on a first processor; and
the processor is configured to, when running the computer program, execute steps of the method according to the first aspect.

In a fourth aspect, an embodiment of the present invention provides a computer storage medium having a program for HARQ buffer clearing stored thereon, where the program for HARQ buffer clearing implements steps of the method according to the first aspect when being executed by at least one processor.

The embodiments of the present invention provide a method for HARQ buffer clearing, a device and a computer storage medium, where the UE can determine whether to clear the data buffered by the HARQ process corresponding to the uplink grant by performing, based on the uplink grant, detection according to the preset detection policy, therefore, HARQ transmission of the old data buffered by the HARQ process can be avoided in some cases such as in the case when the UE skips the uplink grant, which avoids the phenomenon of transmitting wrong data.

### BRIEF DESCRIPTION OF DRAWING(S)

FIG. 1 is a schematic diagram of a situation of data transmission error according to an embodiment of the present invention;
FIG. 2 is a schematic flowchart of a method for HARQ buffer clearing according to an embodiment of the present invention;
FIG. 3 is a schematic diagram of a specific example of HARQ buffer clearing according to an embodiment of the present invention;
FIG. 4 is a schematic diagram of another specific example of HARQ buffer clearing according to an embodiment of the present invention;
FIG. 5 is a schematic structural diagram of a UE according to an embodiment of the present invention; and
FIG. 6 is a schematic structural diagram of specific hardware of a UE according to an embodiment of the present invention.

### DESCRIPTION OF EMBODIMENTS

For more thorough understanding of features and technical contents of embodiments of the present invention, implementations of the embodiments of the present invention will be described in detail with reference to the drawings. The drawings are merely used for illustration, instead of limiting the embodiments of the present invention.

Currently, in terms of a user equipment (UE) performing uplink HARQ, there is a HARQ entity on the UE side, which can maintain a certain number of HARQ processes, where each HARQ process has its own identity, and each HARQ process may correspond to one HARQ buffer. In the process of uplink HARQ transmission, the UE needs a legal uplink grant to transmit data in the HARQ buffer through an uplink shared channel (UL-SCH). The grant may include a statically or semi-statically configured grant or a dynamic grant. Whether it is a configured grant or a dynamic grant, there is great possibility that the UE will skip the grant after the UE acquires the grant and a specific condition is satisfied. Specifically, the UE skipping the grant may be as the following: a MAC entity of the UE does not generate, for the grant, a MAC protocol data unit (PDU) for the HARQ entity of the UE.

It should be noted that, in the relevant communication standard or protocol, after the UE acquires the grant, the UE shall skip the grant if the following conditions are all satisfied:
1. the MAC entity is configured with skipUplinkTxDynamic, and the grant for indicating to the HARQ entity is addressed through a cell radio network temporary identifier (C-RNTI), or the grant for indicating to the HARQ entity is a configured uplink grant;
2. there is no aperiodic CSI requested for physical uplink shared channel (PUSCH) transmission, as specified in TS 38.212(9);
3. the MAC PDU includes zero MAC SDU;
4. the MAC PDU includes only a periodic buffer status report (BSR) and there is no data available for any logical channel group (LCG), or the MAC PDU includes only a padding BSR.

But that the grant is skipped is not a trigger condition for clearing the HARQ buffer. In the current relevant communication standard or protocol, the UE will only clear the HARQ buffer under the following conditions:
1. if a sCellDeactivationTimer associated with an activated Secondary Cell (SCell) expires, then clear the HARQ buffer associated with the SCell;
2. if the Contention Resolution is not successful, then clear the HARQ buffer used for transmission of the MAC PDU in the third-type message (Msg3) buffer;
3. when a timeAlignmentTimer expires, if a timeAlignmentTimer is associated with a primary timing advance group (PTAG), then clear HARQ buffers for all serving cells.

Therefore, old data of the previous HARQ transmission that is correctly completed will be saved in the HARQ buffer. After the grant is skipped by the UE, as the situation is unknowable to the network side, the network side reschedules one grant for indicating HARQ retransmission, then a terminal transmits the old data in the HARQ buffer based on such grant for indicating HARQ retransmission, thereby causing a data transmission error to occur.

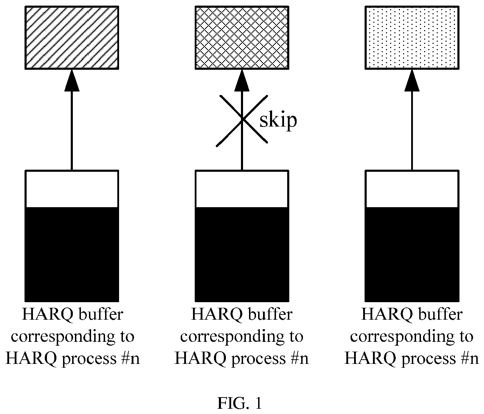

For example, as shown in FIG. 1, a UE receives a grant that is dynamically scheduled (as shown in the block with slashes in FIG. 1), and transmits data in a HARQ buffer corresponding to a HARQ process #n based on the grant. After the data transmission is completed, the UE will not clear the data in the HARQ buffer corresponding to the HARQ process #n, as shown in the black block in FIG. 1. At next, the UE will receive a configured grant, as shown in the block with cross lines in FIG. 1, where the configured grant is assumed to be preset. As the conditions for grant skipping described above are satisfied, the UE may skip the configured grant. But the data in the HARQ buffer is still reserved. Since that the UE has already skipped the configured grant is unknowable to the network side, the network side will retransmit a dynamic grant for indicating HARQ retransmission, as shown in the block with points in FIG. 1. Then the UE transmits the data in the HARQ buffer based on the dynamic grant for indicating HARQ retransmission, thereby causing a data transmission error to occur.

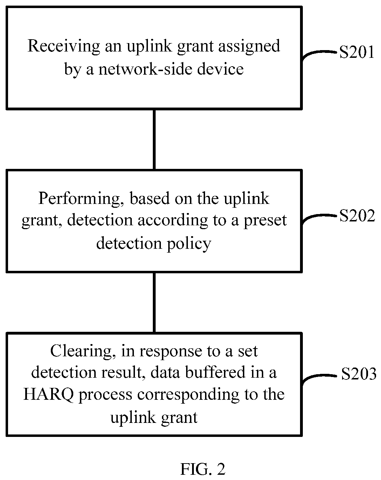

In order to avoid such a situation, referring to FIG. 2, a method for HARQ buffer clearing is shown, where the method is applied to a UE, and the method includes:
S201: receiving an uplink grant assigned by a network-side device;
S202: performing, based on the uplink grant, detection according to a preset detection policy; and
S203: clearing, in response to a set detection result, data buffered in a HARQ process corresponding to the uplink grant.

In the technical solution as shown in FIG. 2, the UE determines whether to clear the data buffered by the HARQ process corresponding to the uplink grant by performing, based on the uplink grant, detection according to the preset detection policy, therefore, HARQ transmission of the old data buffered by the HARQ process can be avoided in some cases such as in the case when the UE skips the uplink grant, which avoids the phenomenon of transmitting wrong data.

For the technical solution shown in FIG. 2, in a possible implementation, the performing detection according to a preset detection policy includes:
detecting whether a media access control protocol data unit (MAC PDU) for transmission is acquired;
detecting whether the uplink grant indicates transmission of new data; and
determining that the set detection result is satisfied, when it is detected that the MAC PDU transmitted by a user cannot be acquired and the uplink grant indicates the transmission of new data.

Specifically, the detecting whether a MAC PDU for transmission is acquired includes:
whether the MAC PDU for transmission is generated, when a set condition is satisfied.

According to the above implementation, in a specific implementation process, the set condition may be the above-described conditions for skipping the grant, and the grant being skipped will cause that the MAC PDU cannot be generated for the HARQ entity of the UE. In addition, if the uplink grant is a grant for indicating retransmission and there is buffered data in the HARQ buffer, then the uplink grant may be used for transmitting the buffered data, i.e., retransmission, and at this time, the set detection result is not satisfied, thus the data in the HARQ buffer cannot be cleared.

Therefore, in this embodiment, when it is detected that the MAC PDU transmitted by the user cannot be generated and the uplink grant indicates transmission of new data, the data buffered by the HARQ process corresponding to the uplink grant is cleared, thereby the situation where a data transmission error occurs can be avoided.

For the technical solution shown in FIG. 2, in another possible implementation, the performing detection according to a preset detection policy includes:
detecting whether a timer (configured grant timer) set for the HARQ process corresponding to the uplink grant expires; and
determining that the set detection result is satisfied, when it is detected that the timer expires.

Specifically, the timer can be configured through RRC signaling received by the terminal. In a specific implementation process, an indication for configuring the timer may be carried in the RRC signaling, therefore, when the indication is received by the UE, the UE configures the timer according to the indication.

In the technical solution shown in FIG. 2, the uplink grant can include: a dynamic grant or a configured grant.

In the above two types of grants, the dynamic grant includes: a grant which is scheduled through a physical downlink control channel (PDCCH) scrambled by a C-RNTI and a configured scheduling radio network temporary identifier (CS-RNTI).

And for the dynamic grant, preferably, when the dynamic grant is used for indicating retransmission of the HARQ process and the HARQ process is empty, the technical solution shown in FIG. 2 can further include skipping the dynamic grant.

In addition, for the dynamic grant, preferably, when the dynamic grant is used for indicating new transmission of the HARQ process, and the HARQ process is empty, and the MAC PDU for transmission is not acquired, the technical solution shown in FIG. 2 can further include skipping the dynamic grant.

In the above two types of grants, the configured grant can include a first type of configured grant (type1 configured grant) and/or a second type of configured grant (type2 configured grant).

Specifically, the type1 configured grant and the type2 configured grant are introduced in the NR protocol, and their corresponding definitions are:
the first type of configured grant is an uplink grant provided by RRC and stored as a configured uplink grant;
the second type of configured grant is an uplink grant provided by PDCCH, and the configured uplink grant is stored or cleared based on configured L1 signaling indicating grant activation or deactivation.

It can be understood that, the configured grant in the embodiments may preferably be the first type of configured grant and the second type of configured grant introduced in the NR protocol.

The technical solution shown in FIG. 2 provides a method for HARQ buffer clearing, where the UE can determine whether to clear the data buffered by the HARQ process corresponding to the uplink grant by performing, based on the uplink grant, detection according to the preset detection policy, therefore, HARQ transmission of the old data buffered by the HARQ process can be avoided in some cases such as in the case when the UE skips the uplink grant, which avoids the phenomenon of transmitting wrong data.

On the basis of the technical solution shown in FIG. 2, the foregoing technical solutions are described in detail by the following specific examples.

### Specific example 1

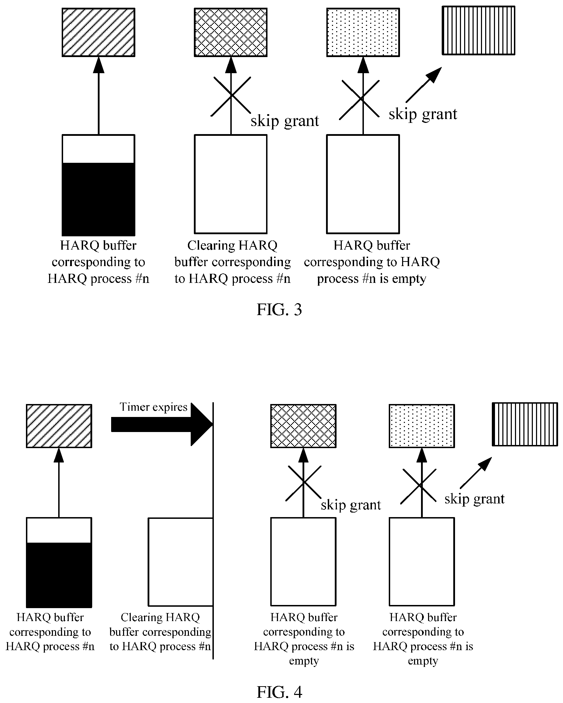

The situation shown in FIG. 1 is taken as an example. Referring to FIG. 3, when the UE skips the configured grant as shown in the block with cross lines, the data in the HARQ buffer corresponding to the HARQ process #n is cleared, then when the dynamic grant for indicating HARQ retransmission as shown in the block with points is received, the HARQ buffer corresponding to the HARQ process #n is empty. Even the UE is set to skip the dynamic grant for indicating HARQ retransmission as shown in the block with points again, when the UE receives the grant as shown in the block with vertical lines, the UE still can perform HARQ data transmission based on the grant as shown in the block with vertical lines using the HARQ buffer corresponding to the HARQ process #n.

### Specific example 2

As shown in FIG. 4, after the UE receives the dynamically scheduled grant as shown in the block with slashes, the UE starts the timer (configured grant timer) set for the HARQ process #n, and transmits the data in the HARQ buffer corresponding to the HARQ process #n based on the grant. After the data transmission is completed, the UE will not clear the data in the HARQ buffer corresponding to the HARQ process #n, instead, when the timer expires, the UE clears the data in the HARQ buffer corresponding to the HARQ process #n, as shown in the arrow filled with black in FIG. 4. It should be noted that, during the starting process of the timer, the configured grant cannot be delivered to the HARQ entity. It can be seen from FIG. 4, after the data in the HARQ buffer corresponding to the HARQ process #n is cleared, when the UE subsequently skips the configured grant as shown in the block with cross lines, the HARQ buffer corresponding to the HARQ process #n is empty, then when the dynamic grant for indicating HARQ retransmission as shown in the block with points is received, the HARQ buffer corresponding to the HARQ process #n is still empty. Even the UE is set to skip the dynamic grant for indicating HARQ retransmission as shown in the block with points again, when the UE receives the grant as shown in the block with vertical lines, the UE still can perform HARQ data transmission based on the grant as shown in the block with vertical lines using the HARQ buffer corresponding to the HARQ process #n.

It can be seen from the above two specific examples that, in the technical solution as shown in FIG. 2, after the HARQ buffer is cleared, HARQ transmission of the old data buffered by the HARQ process can be avoided in some cases such as in the case when the UE skips the uplink grant, which avoids the phenomenon of transmitting wrong data.

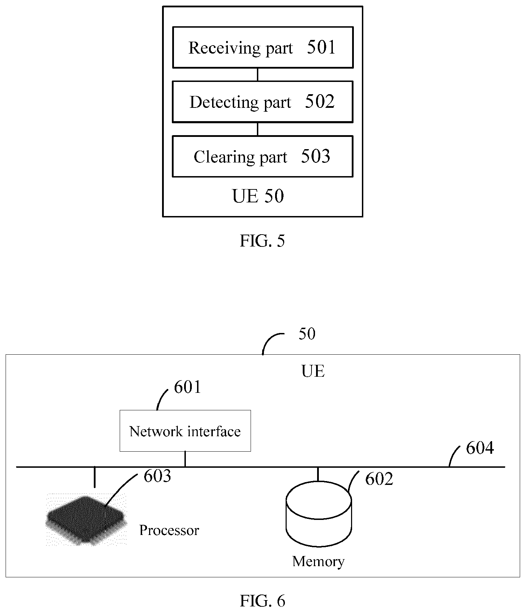

Based on the same inventive concept of the foregoing technical solutions, referring to FIG. 5, FIG. 5 shows a constitution of a UE 50 according to an embodiment of the present invention, including: a receiving part 501, a detecting part 502 and a clearing part 503; where the receiving part 501 is configured to receive an uplink grant assigned by a network-side device;
the detecting part 502 is configure to perform, based on the uplink grant, detection according to a preset detection policy; and
the clearing part 503 is configured to clear, in response to a set detection result, data buffered in a HARQ process corresponding to the uplink grant.

In the foregoing solution, the detecting part 502 is configured to:
detect whether a media access control protocol data unit (MAC PDU) for transmission is acquired;
detect whether the uplink grant indicates transmission of new data; and
determine that the set detection result is satisfied, when it is detected that the MAC PDU transmitted by a user cannot be acquired and the uplink grant indicates the transmission of new data.

In the foregoing solutions, the detecting part 502 is configured to:
whether the MAC PDU for transmission is generated, when a set condition is satisfied.

In the foregoing solutions, the detecting part 502 is configured to:
detect whether a timer set for the HARQ process corresponding to the uplink grant expires; and
determine that the set detection result is satisfied, when it is detected that the timer expires.

In the foregoing solutions, the timer is configured through received RRC signaling.

In the foregoing solutions, the uplink grant includes: a dynamic grant or a configured grant.

In the foregoing solutions, the dynamic grant includes: a grant which is scheduled through a PDCCH scrambled by a C-RNTI and a CS-RNTI.

In the foregoing solutions, the detecting part 502 is further configured to: skip the dynamic grant, when the dynamic grant is used for indicating retransmission of the HARQ process and the HARQ process is empty.

In the foregoing solutions, the detecting part 502 is further configured to: skip the dynamic grant, when the dynamic grant is used for indicating new transmission of the HARQ process, and the HARQ process is empty, and the MAC PDU for transmission is not acquired.

In the foregoing solutions, the configured grant includes a first type of configured grant and/or a second type of configured grant.

It can be understood that, in the embodiments, the "part" may be a partial circuit, a partial processor, a partial program or software, etc., of course, it may also be a unit, a module, or non-modular.

In addition, various components in the embodiments may be integrated into one processing unit, or each unit may exist physically separately, or two or more units may be integrated into one unit. The above integrated unit can be implemented in the form of hardware or in the form of software function modules.

The integrated unit may be stored in a computer readable storage medium if it is implemented in the form of software function modules and is not sold or used as a stand-alone product. Based on such understanding, the technical solutions of the essence of the embodiments or the part contributing to the prior art or all or part of the technical solutions can be embodied in the form of a software product stored in a storage medium, where the software product includes some instructions for causing a computer device (which may be a personal computer, a server, or a network device, etc.) or a processor to perform all or part of the steps of the methods described in the embodiments. The above-mentioned storage medium includes a medium capable of storing program codes, such as: a U disk, a mobile hard disk, a read only memory (ROM), a random access memory (RAM), a magnetic disk, or an optical disk, or the like.

Therefore, an embodiment provides a computer storage medium, having a program for HARQ buffer clearing stored thereon, and the program for HARQ buffer clearing, when being executed by at least one processor, implements the steps of the methods according to the technical solutions as shown in FIG. 2.

Based on the above user equipment 50 and the computer storage medium, referring to FIG. 6, FIG. 6 shows specific hardware structure of the user equipment 50 according to an embodiment of the present invention, which may include: a network interface 601, a memory 602, and a processor 603, and various components are coupled together through a bus system 604. It can be understood that, the bus system 604 is configured to implement connection communication between these components. The bus system 604 includes a power bus, a control bus, and a status signal bus in addition to a data bus. However, for clarity of description, various buses are labeled as the bus system 604 in FIG. 6. The network interface 601 is configured to receive and transmit a signal during a process of transmitting/receiving information to/from other external network element.

The memory 602 is configured to store a computer program that is capable of running on the processor 603.

The processor 603 is configured to, when running the computer program, execute the following:
determining a hybrid automatic repeat request (HARQ) retransmission mode of data to be transmitted based on configuration information for HARQ retransmission of the data to be transmitted; and transmitting the data to be transmitted to a receiving-end of the UE according to the HARQ retransmission mode.

It can be understood that, the memory 602 in the embodiments of the present invention may be a volatile memory or a non-volatile memory, or may include both volatile and non-volatile memories. The non-volatile memory may be a read-only memory (ROM), a programmable read only memory (PROM), an erasable programmable read only memory (Erasable PROM, EPROM), or an electric Erase programmable read only memory (EEPROM) or flash memory. The volatile memory may be a random access memory (RAM) that is used as an external cache. By way of example but not limitation, many forms of RAMs are available, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), and a direct rambus RAM (DRRAM). The memory 602 of the systems and methods described herein is intended to include, without being limited to, these and any other suitable types of memories.

The processor 603 may be an integrated circuit chip with signal processing capabilities. In the implementation process, each step of the foregoing methods may be implemented by an integrated logic circuit of hardware in the processor 603or instructions in a form of software. The processor 603 may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logical block diagrams disclosed in the embodiments of the present invention can be implemented or carried out. The general-purpose processor may be a microprocessor or the processor may be any conventional processor or the like. The steps of the methods disclosed in the embodiments of the present invention may be directly implemented by a hardware decoding processor, or may be implemented by a combination of hardware and software modules in the decoding processor. The software modules can be located in a conventional storage medium such as a random access memory, a flash memory, a read only memory, a programmable read only memory or an electrically erasable programmable memory, a register. The storage medium is located in the memory 602, and the processor 603 reads the information in the memory 602 and implements the steps of the above methods in combination with its hardware.

It will be appreciated that the embodiments described herein can be implemented in hardware, software, firmware, middleware, microcode, or a combination thereof. For hardware implementation, the processing unit can be implemented in one or more application specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units used for implementing functions of the present application, or their combinations.

For a software implementation, the techniques described herein can be implemented by modules (e.g., procedures, functions, and so on) that perform the functions described herein. The software code can be stored in the memory and executed by the processor. The memory can be implemented in the processor or external to the processor.

Specifically, the processor 603 in the user equipment 50 is further configured to, when running the computer program, execute the method steps described in the foregoing Embodiment 1, and details are not described herein.

The above are only the preferred embodiments of the present invention, but are not intended to limit the scope of the present invention.

### Industrial Applicability

In the embodiments of the present invention, the UE determines whether to clear the data buffered by the HARQ process corresponding to the uplink grant by performing, based on the uplink grant, detection according to the preset detection policy, therefore, HARQ transmission of the old data buffered by the HARQ process can be avoided in some cases such as in the case when the UE skips the uplink grant, which avoids the phenomenon of transmitting wrong data.

## Claims

1. A method for hybrid automatic repeat request (HARQ) buffer clearing, wherein the method is applied to a user equipment, and the method comprises:
receiving an uplink grant assigned by a network-side device;
performing, based on the uplink grant, detection according to a preset detection policy; and
clearing, in response to a set detection result, data buffered in a HARQ process corresponding to the uplink grant.

2. The method according to claim 1, wherein the performing detection according to a preset detection policy comprises:
detecting whether a media access control protocol data unit (MAC PDU) for transmission is acquired;
detecting whether the uplink grant indicates transmission of new data; and
determining that the set detection result is satisfied, when it is detected that the MAC PDU transmitted by a user cannot be acquired and the uplink grant indicates the transmission of new data.

3. The method according to claim 2, wherein the detecting whether a MAC PDU for transmission is acquired comprises:
whether the MAC PDU for transmission is generated, when a set condition is satisfied.

4. The method according to claim 1, wherein the performing detection according to a preset detection policy comprises:
detecting whether a timer set for the HARQ process corresponding to the uplink grant expires; and
determining that the set detection result is satisfied, when it is detected that the timer expires.

5. The method according to claim 4, wherein the timer is configured through received RRC signaling.

6. The method according to any one of claims 1 to 5, wherein the uplink grant comprises: a dynamic grant or a configured grant.

7. The method according to claim 6, wherein the dynamic grant comprises: a grant which is scheduled through a physical downlink control channel (PDCCH) scrambled by a cell radio network temporary identifier (C-RNTI) and a CS-RNTI.

8. The method according to claim 7, wherein the method further comprises:
skipping the dynamic grant, when the dynamic grant is used for indicating retransmission of the HARQ process and the HARQ process is empty.

9. The method according to claim 7, wherein the method further comprises:
skipping the dynamic grant, when the dynamic grant is used for indicating new transmission of the HARQ process, and the HARQ process is empty, and the MAC PDU for transmission is not acquired.

10. The method according to claim 6, wherein the configured grant comprises a first type of configured grant and/or a second type of configured grant.

11. A UE, comprising: a receiving part, a detecting part and a clearing part; wherein,
the receiving part is configured to receive an uplink grant assigned by a network-side device;
the detecting part is configure to perform, based on the uplink grant, detection according to a preset detection policy; and
the clearing part is configured to clear, in response to a set detection result, data buffered in a HARQ process corresponding to the uplink grant.

12. The UE according to claim 11, wherein the detecting part is configured to:
detect whether a media access control protocol data unit (MAC PDU) for transmission is acquired;
detect whether the uplink grant indicates transmission of new data; and
determine that the set detection result is satisfied, when it is detected that the MAC PDU transmitted by a user cannot be acquired and the uplink grant indicates the transmission of new data.

13. The UE according to claim 12, wherein the detecting part is configured to:
whether the MAC PDU for transmission is generated, when a set condition is satisfied.

14. The UE according to claim 11, wherein the detecting part is configured to:
detect whether a timer set for the HARQ process corresponding to the uplink grant expires; and
determine that the set detection result is satisfied, when it is detected that the timer expires.

15. The UE according to claim 14, wherein the timer is configured through received RRC signaling.

16. The UE according to any one of claims 11 to 15, wherein the uplink grant comprises: a dynamic grant or a configured grant.

17. The UE according to claim 16, wherein the dynamic grant comprises: a grant which is scheduled through a physical downlink control channel (PDCCH) scrambled by a cell radio network temporary identifier (C-RNTI) and a configured scheduling radio network temporary identifier (CS-RNTI).

18. The UE according to claim 17, wherein the detecting part is further configured to:
skip the dynamic grant, when the dynamic grant is used for indicating retransmission of the HARQ process and the HARQ process is empty.

19. The UE according to claim 17, wherein the detecting part is further configured to:
skip the dynamic grant, when the dynamic grant is used for indicating new transmission of the HARQ process, and the HARQ process is empty, and the MAC PDU for transmission is not acquired.

20. The UE according to claim 16, wherein the configured grant comprises a first type of configured grant and/or a second type of configured grant.

21. A UE, comprising: a network interface, a memory and a processor; wherein,
the network interface is configured to receive and transmit a signal during a process of transmitting/receiving information to/from other external network element;
the memory is configured to store a computer program that is capable of running on a first processor; and
the processor is configured to, when running the computer program, execute steps of the method according to any one of claims 1 to 10.

22. A computer storage medium, having a program for HARQ buffer clearing stored thereon, wherein the program for HARQ buffer clearing implements steps of the method according to any one of claims 1 to 10 when being executed by at least one processor.
